Europäisches Patentamt

European Patent Office

Office européen des brevets

(11) Veröffentlichungsnummer: **0 319 456**
A2

# (12) EUROPÄISCHE PATENTANMELDUNG

(21) Anmeldenummer: 88730255.2

(22) Anmeldetag: 23.11.88

(51) Int. Cl.⁴: **B 29 C 47/02**
B 29 C 47/04

(30) Priorität: 04.12.87 DE 3741627

(43) Veröffentlichungstag der Anmeldung:
07.06.89 Patentblatt 89/23

(84) Benannte Vertragsstaaten:
AT BE DE FR GB IT NL

(71) Anmelder: MANNESMANN Aktiengesellschaft
Mannesmannufer 2
D-4000 Düsseldorf 1 (DE)

(72) Erfinder: Stucke, Walter, Dipl.-Ing.
Portmannweg 8
D-4030 Ratingen 4 (DE)

(74) Vertreter: Meissner, Peter E., Dipl.-Ing. et al
Meissner & Meissner Patentanwälte Herbertstrasse 22
D-1000 Berlin 33 Grunewald (DE)

(54) Verfahren zum kontinuierlichen Ummanteln von Stahlrohren mit Kunststoff.

(57) Die Erfindung betrifft ein Verfahren zum kontinuierlichen Ummanteln von Stahlrohren mit Kunststoff, wobei die auf der Oberfläche gereinigten und erwärmten Stahlrohre mit einem Haftkleber und mit einer als Schlauchfolie darüber gelegten Deckschicht aus Polypropylen beschichtet werden. Um einen langfristigen Einsatz der Rohre bei -25°C bis +125°C zu gewährleisten wird vorgeschlagen, daß in der äußeren Oberfläche der Polypropylenschicht an sich bekannte Längsstreifen aus einem Polypropylen mit einem kleineren Elastizitätsmodul koextrudiert werden mit der Maßgabe, daß die Längsstreifen in Anzahl, Form und Größe als Dehnungsfugen für den Abbau von Spannungen in der äußeren Polypropylenoberfläche ausgebildet sind.

EP 0 319 456 A2

**Beschreibung**

### Verfahren zum kontinuierlichen Ummanteln von Stahlrohren mit Kunststoff

Zum Zwecke des Korrosionsschutzes werden Stahlrohre mit Kunststoff ummantelt. An die Beschichtung werden dabei hinsichtlich der zulässigen Temperaturen hohe Anforderungen gestellt, die unter Umständen weit über die Anforderungen während des bestimmungsgemäßen Einsatzes der Rohre hinausgehen. So muß auch bei Rohren, die an sich für einen dauernden Warmeinsatz vorgesehen sind, eine Beständigkeit (insbesondere Schlagzähigkeit der Ummantelung) bei tiefen Temperaturen (z.B. -25° C) gefordert werden, damit diese Rohre auch unter Winterbedingungen gelagert oder verlegt werden können. Unvorhergesehen tiefe Temperaturen können auch im Falle von Betriebsstillständen eintreten.

Bei Polyäthylenummantelungen von Stahlrohren sind heute je nach Art der verwendeten Materialien (LD-PE oder MD-PE) Verlegetemperaturen bis -25° C bzw. -40° C und Betriebstemperaturen bis zu +65° C bzw. +70° C möglich. Höhere Betriebstemperaturen sind mit diesen Kunststoffen jedoch nicht realisierbar.

Es ist allgeme in bekannt, daß Polypropylen eine höhere Temperaturbeständigkeit als Polyäthylen aufweist. Daher wird Polypropylen auch zur Herstellung warmgehender Kunststoffrohrleitungen (z.B. Warmwasserleitungen oder Heizungsrohre) verwendet. Polypropylen hat jedoch gegenüber Polyäthylen den Nachteil, daß es bei tieferen Temperaturen schlechtere mechanische Eigenschaften (insbesondere Schlagzähigkeit) aufweist. Außerdem unterliegt es einem temperaturabhängigen Alterungsprozeß in Folge der Oxidation endständiger Gruppen, so daß die Gefahr einer Versprödung und Rißbildung z.B. unter dem Einfluß von Spannungen besteht, die in der Kunststoffummantelung eingefroren sind. Die Alterungsanfälligkeit von Polypropylen kann durch Wärme- und UV-stabilisatoren vermindert werden.

Aus der DE-OS 34 22 920 ist ein Verfahren bekannt, die Ummantelung von Stahlrohren zum Zwecke des Korrosionsschutzes für höhere Einsatztemperaturen mit Polypropylen durchzuführen. Das für die Deckschicht verwendete kristalline Äthylen-Propylen-Blockcopolymerisat weist bei tiefen Temperaturen eine gegenüber herkömmlichen Polypropylentypen erhöhte Schlagzähigkeit auf. Als Kleber kommt ein mit Maleinsäureanhydrid modifizierter Polypropylenkleber zum Einsatz. Zur Verbesserung der Haftfestigkeit der Ummantelung und zur Verbesserung der Unterrostung wird in dieser Schrift weiterhin eine Chromatierung der Stahlrohroberfläche und die anschließende Auftragung einer Epoxyharzschicht vor dem Aufbringen der thermoplastischen Mantelschicht vorgeschlagen. Eine derartige Beschichtung soll einen Einsatztemperaturbereich von -30° C bis +120° C ermöglichen. Diese Angaben stellen aber offensichtlich lediglich Kurzzeitwerte dar. Über eine Langzeitbeständigkeit (Dauergebrauchstemperatur) der Beschichtung unter Berücksichtigung der eintretenden Alterung des Werkstoffs ist in dieser Schrift jedoch nichts ausgesagt. Es bleibt daher das Problem, daß sich auf längere Sicht die mechanischen Eigenschaften durch die bereits erwähnten Alterungserscheinungen verschlechtern, so daß die anfänglich eingehaltenen mechanischen Mindestwerte (insbesondere Schlagzähigkeit) nicht mehr gewährleistet sind. Im Grundsatz gilt, daß sich der Temperaturbereich, in dem die mechanischen Eigenschaften eines Kunststoffs vorgegebene Mindestwerte aufweisen, durch Modifikation des Kunststoffs zu höheren oder tiefen Temperaturen verschieben läßt. Dabei ist jedoch zu beachten, daß die Spanne dieses Temperaturbereichs im allgemeinen kaum verändert werden kann. Das bedeutet, daß eine Verbesserung bestimmter Eigenschaften bei tiefen Temperaturen gleichzeitig mit einer entsprechenden Verschlechterung dieser Eigenschaften bei höheren Temperaturen erkauft werden muß und umgekehrt.

Aufgabe der Erfindung ist es, ein Verfahren anzugeben, mit dem eine Kunststoffbeschichtung auf Stahlrohren applizierbar ist, die auch nach langfristigem Einsatz (bis zu 20 Jahre bei +125° C Dauerbelastung) der Rohre etwa -25° C bis + 125° C gewährleistet.

Gelöst wird diese Aufgabe durch ein Verfahren mit den Merkmalen des Patentanspruchs 1; vorteilhafte Weiterbildungen der Erfindung sind in den Unteransprüchen 2 - 8 angegeben.

Die Erfindung geht von der an sich bekannten Tatsache aus, daß für den Einsatz bei Temperaturen über +70° C zweckmäßig Polypropylen als Ummantelungswerkstoff verwendet wird, da z.B. Polyäthylen bei diesen Temperaturen zu stark erweicht. Um gleichzeitig auch bei sehr tiefen Temperaturen noch ausreichende mechanische Langzeiteigenschaften der Beschichtung zu erhalten, wird erfindungsgemäß eine konstruktive Maßnahme im Beschichtungsaufbau getroffen, nämlich die Einbeziehung von Dehnungsfugen in die Oberfläche der Polypropylenbeschichtung, wobei diese Dehnungsfugen aus einem Polypropylen mit einem kleineren Elastizitätsmodul gebildet sind, also entsprechend weicher als das Polypropylen der Deckschicht sind. Die Dehnungsfugen werden als Längsstreifen im Oberflächenbereich zusammen mit dem Grundwekstoff der Deckschicht in Ausreichender Anzahl und geeigneter geometrischer Ausbildung im Hinblick auf die ihnen zugedachte Funktion koextrudiert. Sie bewirken, daß Spannungen in der Oberfläche der Beschichtung durch die größere Dehnfähigkeit der Längsstreifen abgebaut werden. Diese Maßnahme ist deswegen wirksam, weil gerade im Oberflächenbereich durch die dort stets intensiver als in tieferen Schichten der Ummantelung erfolgende Kühlung beim Aufbringen der Polypropylen-Beschichtung die größten Spannungen eingefroren werden.

Infolgedessen wird der negative Einfluß dieser Eigenspannungen gerade dort vermindert, wo durch äußere Einwirkungen (z.B. Stoßbelastungen durch Steinschlag) eine Rißbildung in der Ummantelung eines Stahlrohres ausgelöst werden kann. Eine im Oberflächenbereich entsprechend eigenspannungsentlastete Beschichtung auf einem Stahlrohr ist daher weniger empfindlich als eine normale Stahlrohrbeschichtung, die ansonsten aus dem gleichen Material und unter gleichen Extrusions- und Kühlbedingungen hergestellt wurde.

Zweckmäßigerweise wird für das Grundmaterial der Deckschicht ein Polypropylen mit einem Elastizitätsmodul von 1100 bis 1400 N/mm² und für die Dehnfugen ein Polypropylen mit einem Elastizitätsmodul von 700 bis 900 N/mm² gewählt, wobei das Verhältnis der beiden Elastizitätsmodule bei etwa 1,4 bis 1,6 liegen sollte. Eine Wertekombination von 1200 N/mm² und 800 N/mm² ist besonders geeignet.

Für die Verwendung als Grundmaterial der Polypropylen-Deckschicht hat sich ein Blockcopolymerisat aus einer Äthylen-Propylen-Kautschuk-Mischung, dessen "normaler" Einsatztemperaturbereich zwischen -10°C und +110°C liegt, als zweckmäßig herausgestellt. In Verbindung mit den erfindungsgemäßen Dehnfugen ergibt sich dabei ein Einsatztemperaturbereich der fertigen Rohrbeschichtung von mindestens -25°C bis +125°C.

Im axialen Querschnitt sollen die Längsstreifen eine in etwa linsenförmige Gestalt aufweisen, d.h. insbesondere sich nach außen über die Oberfläche der eigentlichen Polypropylen-Beschichtung hinaus in konvexer Form erheben. Dabei sollten die Streifen an ihren Rändern einen sanften Übergang in den Grundwerkstoff der Beschichtung aufweisen, damit an diesen Stellen keine Kerbwirkung eintritt.

Als vorteilhaft hat es sich erwiesen, die Längsstreifen gleichmäßig über den Umfang des zu beschichtenden Rohres zu verteilen und ihnen im Querschnitt eine Höhe (Materialdicke im Bereich der Streifenmitte) zu geben, die etwa 10 bis 25 % der Dicke der Polypropylen-Deckschicht beträgt, und ihre Breite (in Summe) im Bereich von 12 - 20 % des Rohrumfangs zu halten.

In besonders bevorzugter Ausführung der Erfindung werden die Dehnfugen in anderer Weise eingefärbt als das eigentliche Deck-Polypropylen. Dadurch ergeben sich farbige Signierstreifen die aus der DE-OS 31 22 043 für Polyäthylen-beschichtete Rohre grundsätzlich bekannt sind und zur Kennzeichnung des in der jeweiligen Rohrleitung beförderten Mediums (z.B. Erdgas oder Wasser) dienen. Über eine mögliche Funktion dieser Streifen im Sinne von Dehnungsfugen ist in dieser Schrift nichts ausgesagt. Da Polypropylen grundsätzlich alterungsanfällig ist, kann es zweckmäßig sein, die Einfärbung der Streifen so einzurichten, daß ein Farbumschlag auf eine andere Farbe bewirkt wird, sobald die Polypropylen-Beschichtung infolge ihrer Einsatzbeanspruchung einem Alterungszustand erreicht hat, von dem ab die mechanischen Eingenschaften unter ein vorgegebenes Mindestniveau abgesunken sind. Je geringer die Temperaturdauerbelastung ist, umso später tritt der Farbumschlag ein.

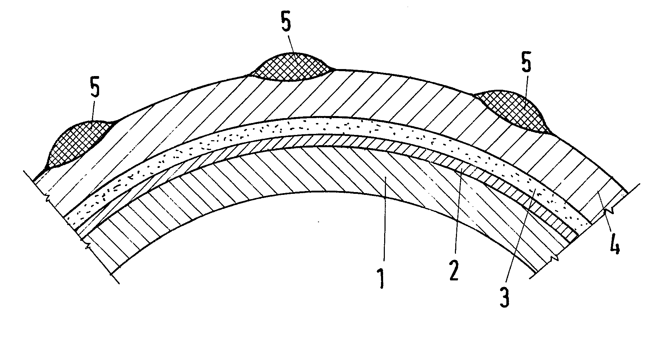

Die Figur zeigt schematisch anhand eines axialen Rohrquerschnitts mit einer 3-schichtigen Kunststoffummantelung, die auf einem Stahlrohr 1 angeordnet ist und eine Epoxyharzschicht 2 als Primerschicht, eine Haftkleberschicht 3 aus einem Polypropylen-Copolymerisat und eine abschließende Deckschicht 4 aus einem Polypropylen-Blockcopolymerisat aufweist, in welcher Form die aus einem weicheren Polypropylen hergestellten Längsstreifen 5 als Dehnfugen ausgebildet und auf dem Rohrumfang angeordnet werden können.

Zur Verbesserung der Haftung der Kunststoffbeschichtung kann die Stahlrohroberfläche zusätzlich eine Chromatierung aufweisen. Bei einem Absinken der Einsatztemperatur eines derart beschichteten Stahlrohres auf z.B. -25°C treten insbesondere in den Oberflächenzonen der Beschichtung erhebliche Zugspannungen auf, da das Stahlrohr selbst deutlich weniger Schrumpft als die Polypropylen- Ummantelung.

Die Schrumpfspannungen gehen bis in die Längsstreifen 5 hinein, die hierdurch in die Breite gezogen und insgesamt flacher werden, da sie aus einem bei dieser Temperatur sehr viel nachgiebigeren Material bestehen, so daß insgesamt die Zugspannungen in Umfangsrichtung im Oberflächenbereich abgebaut werden.

Anhand des nachfolgenden Ausführungsbeispiels wird die Erfindung näher erläutert.

Stahlrohre von 168 mm Durchmesser und 5 mm Wanddicke werden mittels an ihren Enden aufgeschobener Kunststoffkupplungskappen zu einem endlosen Strang aneinandergereiht und in einem kontinuierlichen Ummantelungsverfahren mit Polypropylen beschichtet. Dabei werden die Stahlrohre an ihrer äußeren Oberfläche zu Beginn durch Strahlen mittels gerundetem Stahldrahtkorn gereinigt, wobei auf der Rohroberfläche eine mittlere Rauhtiefe von 40 - 60 μm entsteht. Danach wird auf die Rohroberfläche ein flüssiges Chromatierungsmittel aufgebracht, wodurch nach vollständiger Trocknung eine Chromatschichtdicke von unter 1 μm entsteht. Die so behandelten Rohre werden induktiv auf etwa 210 °C vorgewärmt. Die Höhe der Vorwärmtemperatur hängt im wesentlichen von den Aushärteeigenschaften des als Primer verwendeten Epoxyharz-Härtergemisches ab. Dieses wird in Pulverform in einer Schichtdicke von ca. 50 μm aufgetragen.

Unmittelbar anschließend wird mittels eines Schlauchfolienextruders ein Polypropylen-Blockcopolymerisat als Kleber bei einer Verarbeitungstemperatur von etwa 210 °C in einer Schichtdicke von mindestens 150 μm aufgebracht. Die zweckmäßige Verarbeitungstemperatur liegt etwa im Bereich von 200 - 220 °C. Der Kleber könnte auch in Form von Pulver, welches durch die Vorerwärmung des Stahlrohres bzw. durch zusätzliche äußere Wärmezufuhr aufgeschmolzen wird, aufgebracht werden. Andererseits kann dies mit Vorteil auch in Form eines Doppelschlauches in Verbindung mit der Aufbringung der anschließenden Polypropylen-Deckschicht erfolgen. Der Kleber weist einen Schmelzindex von $i_{21,6/190} = 5,2$ g/10 min (DIN 53735) auf. Es ist zweckmäßig, den Schmelzindex des Klebers im Bereich 4 - 6 g/10 min zu wählen. Für die äußere Deckschicht wird ebenfalls ein Polypropylen-Blockcopolymerisat verwendet, das allerdings einen wesentlich geringeren Schmelzindex von $i_{21,6/190} = 0,25$

g/10 min aufweist. Der Bereich für die zweckmäßige Auswahl des Schmelzindex für das Deckpolypropylen liegt etwa bei 0,2 - 0,3 g/10 min. Die Extrusion der als Schlauchfolie erzeugten Polypropylen-Deckschicht erfolgt in einer Schichtdicke von 2 mm und bei einer Verarbeitungstemperatur von 225 °C; es empfiehlt sich, die Verarbeitungstemperatur in einem Bereich von 210 - 230 °C zu halten. Gleichzeitig mit dem Deckpolypropylen werden in der Schlauchfolie Streifen eines andersgearteten Polypropylen-Blockcopolymerisates koextrudiert. Für diese als "Dehnungsfugen" fungierenden Streifen wird ein Polypropylen mit einem Schmelzindex $i_{21,6/190}$ von ca. 0,54 g/10 min verwendet. Zweckmäßigerweise sollte ein Bereich von 0,4 - 0,6 g/10 min für den Schmelzindex dieses Materials nich verlassen werden. Die Extrusionstemperatur wird mit 240°C in dem als vorteilhaft erachteten Bereich von 220 -250°C gehalten. Insgesamt werden 6 an der Oberfläche der Polypropylen-Deckschicht angeordnete Streifen extrudiert, die im Querschnitt eine etwa linsenförmige Form aufweisen, wobei die maximale Dicke ca. 0,4 mm und die Breite 12 mm beträgt und der Übergang an den Rändern der Streifen in das Grundmaterial sanft erfolgt.

Anschließend durchlaufen die beschichteten Stahlrohre eine Kühlstrecke, auf der sie mit Kühlwasser übergossen werden. Eine in dieser Weise hergestellte Polypropylen-Beschichtung zeigt gegenüber einer vergleichbaren Beschichtung ohne die erfindungsgemäßen "Dehnungsfugen" eine deutliche Verminderung der eingefrorenen Spannungen insbesondere im Oberflächenbereich. Bei sehr tiefen Prüftemperaturen (unter -30°C) weist die mit Streifen versehene Beschichtung ein erheblich günstigeres Schrumpfverhalten infolge der höheren Elastizität im Bereich der Streifen auf als eine vergleichbare Polypropylen-Beschichtung ohne diese Streifen und führt erst bei sehr viel tieferen Temperaturen zu schrumpfspannungsbedingten Rissen.

**Patentansprüche**

1. Verfahren zum kontinuierlichen Ummanteln von Stahlrohren mit Kunststoff, wobei die auf der Oberfläche gereinigten und erwärmten Stahlrohre mit einem Haftkleber und mit einer als Schlauchfolie darüber gelegten Deckschicht aus Polypropylen beschichtet werden, dadurch gekennzeichnet, daß in der äußeren Oberfläche der Polypropylenschicht an sich bekannte Längsstreifen aus einem Polypropylen mit einem kleineren Elastizitätsmodul koextrudiert werden mit der Maßgabe, daß die Längsstreifen in Anzahl, Form und Größe als Dehnungsfugen für den Abbau von Spannungen in der äußeren Polypropylenoberfläche ausgebildet sind.

2. Verfahren nach Anspruch 1, dadurch gekennzeichnet, daß für die Deckschicht ein Polypropylen mit einem Elastizitätsmodul von 1100 - 1400 N/mm² (IS0178) und für die Längsstreifen ein Polypropylen mit einem Elastizitätsmodul von 700 - 900n N/mm² verwendet wird, wobei das Verhältnis der Elastizitätsmodule 1,4 - 1,6 beträgt.

3. Verfahren Anspruch 1 oder 2, dadurch gekennzeichnet, daß für die Polypropylendeckschicht ein Blockcopolymerisat aus einer Mischung von Äthylen-Propylen-Kautschuk mit einer Dauergebrauchstemperatur bei herkömmlicher Ausführung der Beschichtung von - 10° bis +110 °C (Langzeitwerte) verwendet wird.

4. Verfahren nach einem der Ansprüche 1 - 3, dadurch gekennzeichnet, daß die Längsstreifen mit einer nach innen und außen konvex geformten Wölbung extrudiert werden, wobei in den Randzonen der Längsstreifen ein kerbfreier Übergang in den Grundwerkstoff der Deckschicht erzeugt wird.

5. Verfahren nach einem der Ansprüche 1 - 4, dadurch gekennzeichnet, daß die Längsstreifen im axialen Rohrquerschnitt mit einer Gesamthöhe, die 10 - 25 % der Polypropylen-Deckschichtdicke beträgt, und mit einer Breite, die in Summe etwa 12 - 20 % des Rohrumfangs ausmacht, extrudiert werden.

6. Verfahren nach einem der Ansprüche 1 - 5, dadurch gekennzeichnet, daß die Längsstreifen gleichmäßig über den Rohrumfang verteilt extrudiert werden.

7. Verfahren nach einem der Ansprüche 1 - 6, dadurch gekennzeichnet, daß für die Längsstreifen ein Polypropylen verwendet wird, das mit einem vom Propylen der Deckschicht unter schiedlichen Farbstoff vermischt ist und Wärmestabilisatoren enthält.

8. Verfahren nach Anspruch 7, dadurch gekennzeichnet, daß als Farbstoff ein Stoff verwendet wird, der durch Änderung seines Farbtons das Ende der zulässigen Gebrauchszeit der Beschichtung anzeigt.